# EUROPEAN PATENT APPLICATION

(11) **EP 4 712 432 A2**
(43) Date of publication of application: **18.03.2026**
(21) Application number: 26150918.6
(22) Date of filing: 29.06.2023
(51) Int. Cl.: H04L 45/16

(54) **METHOD AND SYSTEM FOR A SEGMENTED MULTI-SITE SPB NETWORK**

(62) Divisional of application: 23943893.0
(71) Applicant: ALE USA Inc., Thousand Oaks, CA 91320 (US)
(72) Inventor: RAO, Prashant, Thousand Oaks, 91320 (US); NAGARAJAN, Anil, Thousand Oaks, 91320 (US); CHANDRAN, Abhijeet, Thousand Oaks, 91320 (US); MULLANGI SURYAPRABHAKAR, Uday, Thousand Oaks, 91320 (US); KAILASAM, Paramesh, Thousand Oaks, 91320 (US)
(74) Representative: BCF Global

(57) **Abstract**

A method and system are disclosed, for building segmented SPB network comprising at least two sites (102ᵢ) and a IS-IS for SPB network topology, wherein each one of the at least two sites comprises at least one Site Border Node, SBN (105il), and at least one node, the node being an end-point node (BEB 104ij) or an intermediate node (BCB 103ik), connected to the at least one SBN through a IS-IS for SPB Level 1 interface to form an intra-site network that operates in IS-IS for SPB Level 1, wherein each one of the at least one SBN and the at least one node is identified with a unique first System-id; and all SBNs are connected through a IS-IS for SPB Level 2 interface to form an inter-site network that operates in IS-IS for SPB Level 2.

## Description

### FIELD

The present technology relates to networking, more particularly to a method and system for a segmented SPB network comprising at least two sites and an IS-IS for SPB network topology.

### BACKGROUND

The current deployments of Shortest Path Bridging (SPB) networks operate in a flat topology also known as Level 1 networks. The bridge nodes form Level 1 adjacencies in order to establish the SPB network. While this allows simplicity of configuration and maintenance, it also imposes limits to the scalability of the network. The limitations arise in both the control plane and the data plane.

As regard the control plane, IEEE 802.1aq SPB enables multipath routing by using IS-IS, defined in ISO/IEC 10589, as the routing protocol to move information by determining the best route (ie: shortest path) for packets through a packet-switched network. The control plane limitations arise from the resource and computation required by the "IS-IS for SPB" protocol to establish and actively manage the reachability for all nodes in the network.

The data plane limitation lies in the amount of service tunnels that can be established between the nodes in the network. The overall limitation for number of nodes supported in a flat SPB network typically is in the range of 500 to 1000 nodes depending on the CPU and switching ASIC associated with the nodes in the SPB network. With the rapid adoption of SPB networks due to their versatility and ease of deployment, many such deployments are reaching the maximum limit to their network scalability.

To address such limitations, typically the network will be provisioned as segmented networks. A separate underlay interface will be provisioned in between these segmented SPB networks to provide a fabric interconnect. The interconnect network can be another Layer 2 or Layer 3 based overlay necessitating additional configuration and management for this core network. Such tiering typically does not give the visibility, simplicity in management of a single network, rapid convergence of an SPB network, and leads to header bloat issues resulting from tiering of the overlay stack on the payload. This transit network is also agnostic to the edge SPB network and its resources. The result is a suboptimal network for both operations and management. Such a network configuration is also not feasible for deployments that require hyper scalable native SPB solutions.

Generally speaking, the present technology aims at providing a segmented SPB network, and a method to build the same, comprising at least two sites, with each site comprising at least one site border node. The site border nodes are connected through a IS-IS for SPB Level 2 interface to form an inter-site network that operates in IS-IS for SPB Level 2, while in each site, each site border node is connected to other nodes through a IS-IS for SPB Level 1 interface to form an intra-site network that operates in IS-IS for SPB Level 1.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art, in particular the limitations to building hyper scalable and secure service SPB network. Removing these limitations entailed in one aspect of the present technology to develop a segmented SPB network comprising at least two sites and a IS-IS for SPB network topology, wherein each one of the at least two sites comprises at least one Site Border Node, SBN, and at least one node, the node being an end-point node or an intermediate node, connected to the at least one SBN through a IS-IS for SPB Level 1 interface to form an intra-site network that operates in IS-IS for SPB Level 1, wherein each one of the at least one SBN and the at least one node is identified with a unique first System-id; and all SBNs are connected through a IS-IS for SPB Level 2 interface to form an inter-site network that operates in IS-IS for SPB Level 2.

In one embodiment of the segmented SPB network, each one of the at least two sites is associated a unique Site-id, which is assigned as a 3-byte area address field of TLVs of control frames constructed and advertised by all SBNs of each site respectively, on their IS-IS for SPB Level 2 interface.

In another embodiment of the segmented SPB network, each one of the at least two sites is associated a unique Site-name which is assigned as a 32-byte system name field of TLVs of control frames constructed and advertised by all SBNs of each site respectively, on their IS-IS for SPB Level 2 interface.

In yet another embodiment of the segmented SPB network, the unique Site-id is further assigned as a 3-byte area address field of TLVs of control frames constructed and advertised by all SBNs of each site respectively, on their IS-IS for SPB Level 1 interface.

In yet another embodiment of the segmented SPB network, the unique Site-id is further assigned as a 3-byte area address field of TLVs of control frames constructed and advertised by all the nodes of each intra-site network respectively, on their IS-IS for SPB Level 1 interface.

In yet another embodiment of the segmented SPB network, each SBN of a site, as local site, discovers all other SBNs of the local site and all SBNs of other sites, as remote sites, in the segmented SPB network, and maintains a list of all the discovered SBNs and the local or remote sites they are comprised in, based on the Site-id value obtained through parsing the area address field of TLVs of received control frames.

In yet another embodiment of the segmented SPB network, each SBN of the local site discovers other SBNs comprised in the local site, as peer SBNs, by:
- determining that the Site-id value obtained through parsing the area address field of TLVs of received control frames on its IS-IS for SPB Level 2 interface is identical to the Site-id value of the local site; and
- determining that the peer SBNs operate in IS-IS for SPB Level 1, through identifying the unique first System-id in the control frames received from the peer SBNs on its IS-IS for SPB Level 1 interface.

In yet another embodiment of the segmented SPB network, each SBN of the local site discovers SBNs of remote sites, as remote SBNs, by determining that the Site-id value obtained through parsing the area address field of TLVs of received control frames on its IS-IS for SPB Level 2 interface is different from the Site-id value of the local site.

In yet another embodiment of the segmented SPB network, upon establishing adjacency between at least two SBNs comprised in two different sites, a Site Meta Node, SMN, is instantiated on each one of the at least two SBNs, wherein the SMN is identified with a unique second System-id that is different from any of the first System-ids, wherein the SMN hosts a representation of the segmented SPB network, comprising information regarding all discovered SBNs and the local or remote sites they are comprised in.

In yet another embodiment of the segmented SPB network, the unique second System-id is a 6-byte value obtained from the concatenation of a 3-byte Organization Unique Identifier, OUI, and of the Site-Id of the site comprising the SBN on which the SMN is instantiated.

In yet another embodiment of the segmented SPB network, the SMN is instantiated in the Level 1 intra-site network of the local site comprising the SBN on which it is instantiated, comprising animating SMN Link-State Packets, LSPs, with the peer SBNs as neighbors with equal cost, and a maximum path weight supported by the network to ensure that the SMN functions as an end-point node of the segmented SPB network.

In yet another embodiment of the segmented SPB network, the instantiated SMN provides an all-active and failover mode for the connectivity between the nodes of the local site and the nodes of remote sites.

In yet another embodiment of the segmented SPB network, one SBN among the peer SBNs of the local site is elected as Designated Animator, DA, wherein the DA performs instantiation of the SMN and animation and management of the SMN LSPs.

In yet another embodiment of the segmented SPB network, the DA is elected based on the SBN among the peer SBNs with the lowest unique first System-id among the peer SBNs.

In yet another embodiment of the segmented SPB network, all peer SBNs of the local site perform instantiation of the SMN and animation and management of the SMN LSPs.

In yet another embodiment of the segmented SPB network, each SBN of the local site:
- mines LSP frames received from all SBNs in the inter-site network, and
   maintains a list of ISID TLVs included in the mined LSP frames from the inter-site network;
- mines LSP frames received from nodes of the local site in the intra-site network, and maintains a list of ISID TLVs included in the mined LSP frames from the intra-site network;
- maintains a per SBN path ownership from the SMN to a node of the local site, wherein the path ownership is determined per ECT/BVLAN; and
- advertises, through LSP frames it generates to the Level 2 inter-site network, ISID TLVs of the local site.

In yet another embodiment of the segmented SPB network, the peer SBNs of the local site discover a subset of ISID TLVs that are common between the local site and remote sites.

In yet another embodiment of the segmented SPB network, each SBN of the local site advertises to the intra-site network the subset of ISID TLVs by encoding the LSP of the SMN instantiated on the SBN.

In yet another embodiment of the segmented SPB network, policy rules are entered by an administrator on the peer SBNs of the local site, such policy rules having as an object to filter out at least one of:
- ISID TLVs included in LSP frames received from the inter-site network, and
- ISID TLVs of the local site advertised in LSP frames generated to the the inter-site network.

In yet another embodiment of the segmented SPB network, upon establishing IS-IS for SPB Level 1 adjacency between the SBNs and the at least one node, a check is performed on the Site-id, wherein adjacency is established only if the Site-id values match on all the Level 1 circuits of each of the SBNs and the at least one node.

In yet another embodiment of the segmented SPB network, upon checking the Site-id value obtained through parsing the area address field of TLVs of received control frames, a check is performed on the local site that the obtained Site-id value is the same as the Site-id value associated with the local site, wherein any backdoor between a node of the local site and a node of the remote site is disabled if the obtained Site-id value is not the same as the Site-id value associated with the local site.

In another aspect, various embodiments of the present technology provide a computer-implemented method of building a segmented SPB network comprising at least two sites and a IS-IS for SPB network topology, the method comprising:
- assigning a unique Site-id to each one of the at least two sites; and
- associating at least one Site Border Node, SBN, with each one of the at least two sites;
- connecting all the SBNs in the segmented SPB network through a IS-IS for SPB Level 2 interface to form an inter-site network that operates in IS-IS for SPB Level 2; and
- assigning to each SBN the unique Site-id of the site it is associated with, as a 3-byte area address field of TLVs of control frames constructed and advertised by each SBN respectively on its IS-IS for SPB Level 2 interface.

In one embodiment, the method further comprises:
- connecting to each of the at least one SBN, at least one node, the node being an end-point node (BEB 104ij) or an intermediate node (BCB 103ik), through a IS-IS for SPB Level 1 interface to form an intra-site network that operates in IS-IS for SPB Level 1, wherein each one of the at least one SBN and the at least one node is identified with a unique first System-id; and
- further assigning to each SBN the unique Site-id of the site it is associated with, as a 3-byte area address field of TLVs of control frames constructed and advertised by each SBN respectively on its IS-IS for SPB Level 1 interface.

In another embodiment, the method further comprises assigning to each node the unique Site-id of the site it is associated with, as a 3-byte area address field of TLVs of control frames constructed and advertised by each node respectively on its IS-IS for SPB Level 1 interface.

In yet another embodiment, the method further comprises causing each SBN of a site, as local site, to discover all other SBNs of the local site and all SBNs of other sites, as remote sites, in the segmented SPB network, and maintain a list of all the discovered SBNs and the local or remote sites they are comprised in, based on the Site-id value obtained through parsing the area address field of TLVs of received control frames.

In yet another embodiment, the method further comprises causing each SBN of the local site to discover other SBNs comprised in the local site, as peer SBNs, by:
- determining that the Site-id value obtained through parsing the area address field of TLVs of received control frames on its IS-IS for SPB Level 2 interface is identical to the Site-id value of the local site; and
- determining that the peer SBNs operate in IS-IS for SPB Level 1, through identifying the unique first System-id in the control frames received from the peer SBNs on its IS-IS for SPB Level 1 interface.

In yet another embodiment, the method further comprises causing each SBN of the local site to discover SBNs of remote sites, as remote SBNs, by determining that the Site-id value obtained through parsing the area address field of TLVs of received control frames on its IS-IS for SPB Level 2 interface is different from the Site-id value of the local site.

In yet another embodiment, the method further comprises upon establishing adjacency between at least two SBNs comprised in two different sites, instantiating a Site Meta Node, SMN, on each one of the at least two SBNs, wherein the SMN is identified with a unique second System-id that is different from any of the first System-ids, wherein the SMN hosts a representation of the segmented SPB network, comprising information regarding all discovered SBNs and the local or remote sites they are comprised in.

In yet another embodiment, the method further comprises obtaining the unique second System-id is a 6-byte value from the concatenation of a 3-byte Organization Unique Identifier, OUI, and of the Site-Id of the site comprising the SBN on which the SMN is instantiated.

In yet another embodiment, the method further comprises instantiating the SMN in the Level 1 intra-site network of the local site comprising the SBN on which it is instantiated, comprising animating SMN Link-State Packets, LSPs, with the peer SBNs as neighbors with equal cost, and a maximum path weight supported by the network to ensure that the SMN functions as an end-point node of the segmented SPB network.

In yet another embodiment, the method further comprises causing the instantiated SMN to provide an all-active and failover mode for the connectivity between the nodes of the local site and the nodes of remote sites.

In yet another embodiment, the method further comprises electing one SBN among the peer SBNs of the local site as Designated Animator, DA, wherein the DA performs instantiation of the SMN and animation and management of the SMN LSPs.

In yet another embodiment, the method further comprises causing the election of the DA to be based on the SBN among the peer SBNs with the lowest unique first System-id among the peer SBNs.

In yet another embodiment, the method further comprises causing all peer SBNs of the local site to perform instantiation of the SMN and animation and management of the SMN LSPs.

In yet another embodiment, the method further comprises causing each SBN of the local site:
- to mine LSP frames received from all SBNs in the inter-site network, and
   maintain a list of ISID TLVs included in the mined LSP frames from the the inter-site network;
- to mine LSP frames received from nodes of the local site in the intra-site network, and maintain a list of ISID TLVs included in the mined LSP frames from the intra-site network;
- to maintain a per SBN path ownership from the SMN to a node of the local site, wherein the path ownership is determined per ECT/BVLAN; and
- to advertise, through LSP frames it generates to the Level 2 inter-site network, ISID TLVs of the local site.

In yet another embodiment, the method further comprises causing the peer SBNs of the local site to discover a subset of ISID TLVs that are common between the local site and remote sites.

In yet another embodiment, the method further comprises causing each SBN of the local site to advertise to the intra-site network the subset of ISID TLVs by encoding the LSP of the SMN instantiated on the SBN.

In yet another embodiment, the method further comprises entering by an administrator policy rules on the peer SBNs of the local site, such policy rules having as an object to filter out at least one of:
- ISID TLVs included in LSP frames received from the inter-site network, and
- ISID TLVs of the local site advertised in LSP frames generated to the the inter-site network.

In yet another embodiment, the method further comprises upon establishing IS-IS for SPB Level 1 adjacency between the SBNs and the at least one node, performing a check on the Site-id, wherein adjacency is established only if the Site-id values match on all the Level 1 circuits of each of the SBNs and the at least one node.

In yet another embodiment, the method further comprises upon checking the Site-id value obtained through parsing the area address field of TLVs of received control frames, performing a check on the local site that the obtained Site-id value is the same as the Site-id value associated with the local site, wherein any backdoor between a node of the local site and a node of the remote site is disabled if the obtained Site-id value is not the same as the Site-id value associated with the local site.

In another aspect, various embodiments of the present technology provide a computer-readable medium comprising computer-readable instructions that, upon being executed by a system, cause the system to perform the various embodiments of the method above.

In the context of the present description, unless expressly provided otherwise, a computing system, may refer, but is not limited to, an "electronic device", an "operation system", a "system", a "computer-based system", a "controller unit", a "monitoring device", a "control device" and/or any combination thereof appropriate to the relevant task at hand.

In the context of the present specification, the expression "FPGA" is intended to include Field Programmable Gate Array computing systems, available on the market at the time of filing this patent application, such as references Xilinx VU9P, or Intel Stratix V, and any subsequent equivalent technologies becoming available, regardless of their name, consisting in computing system hardware programmable with software.

In the context of the present description, the expression "processor" in intended to include a single dedicated processor, a single shared processor, or a plurality of individual processors, some of which may be shared. In some aspects of the present technology, the processor may be for example a general purpose processor, such as a central processing unit (CPU), a processor dedicated to a specific purpose, or a processor implemented in a FPGA. Other hardware, conventional and/or custom, may also be included.

In the context of the present description, unless expressly provided otherwise, the expression "memory" is intended to include Random Access storage systems, available on the market at the time of filing this patent application, and any subsequent equivalent technologies becoming available, regardless of their name, consisting in computing system media for storing digital information. An example of such memory may be a Quad Data Rate (QDR) Static Random Access Memory (SRAM).

In the context of the present description, the functional steps shown in the figures, may be provided through the use of dedicated hardware, as well as hardware capable of executing software in association with appropriate software.

Still in the context of the present description, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present description, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 illustrates an exemplary architecture for the network according to the present technology;
Figure 2 illustrates configuration of SBNs and site discovery process, using the exemplary network architecture of Figure 1;
Figure 3 provides a logical representation associated with the exemplary network architecture of Figure 1, involving Meta Sites and Site Meta Nodes;
Figure 4 depicts an intra-site IS-IS for SPB Level 1 network with Site Meta Node LSP animation in relation to a particular site of the exemplary network architecture of Figure 1;
Figure 5 represents the inter-site forwarding data path between two sites of the exemplary network of Figure 1;
Figure 6 depicts computer-implemented method steps according to one aspect of the present technology;
Figure 7 depicts computer-implemented method steps according to a second aspect of the present technology; and
Figure 8 represents an example of a computing system that may be used to execute the method and process steps according to the present technology.

It should be noted that, unless otherwise explicitly specified herein, the drawings are not to scale. Further, elements that are identical from one figure to the next share the same reference numerals.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

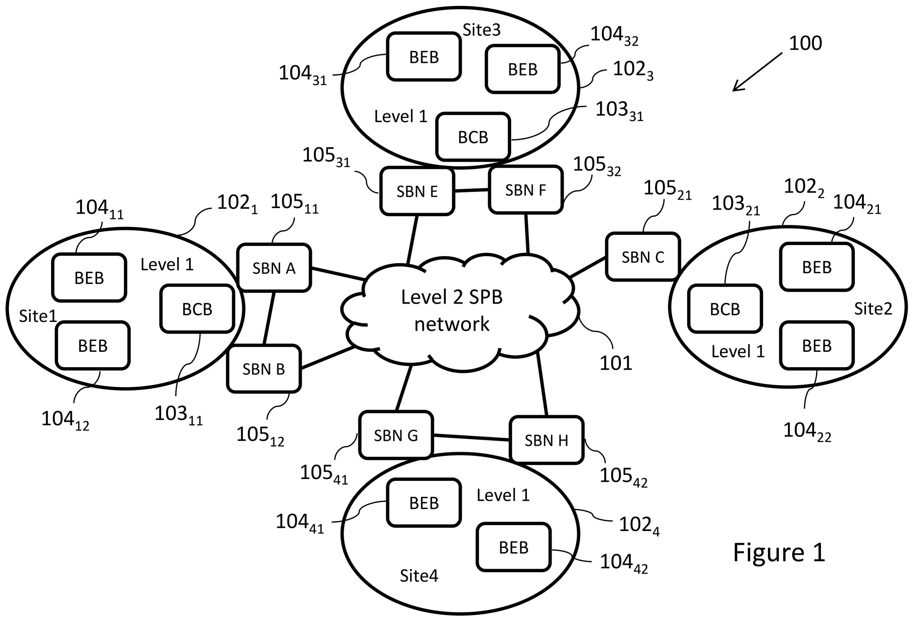

Figure 1 illustrates an exemplary network architecture for the present technology. Such an architecture comprises a number i of Sites 102ᵢ (of which four are represented as an example). Each Site 102ᵢ may comprise:
- a number j (j >=0) of Backbone Edge Bridges (BEB) 104ᵢⱼ (of which j=1 and j=2 per Site 102ᵢ are represented as an example); and
- a number k (k >= 0) of Backbone Core Bridges (BCB) 103ᵢₖ (of which k=0 or k=1 per Site 102ᵢ are represented as an example);
and may be connected, through:
- a number l of Site Border Nodes (SBN) 105ᵢₗ (of which l=1 or l=2 per Site 102ᵢ are represented as an example)
to a Level 2 SPB network 101.

Each SBN 105ᵢₗ may be connected to the BCBs 103ᵢₖ and BEBs 104ᵢⱼ through a Level 1 interface, and connected to the Level 2 SPB network 101 over a Level 2 interface.

According to the present technology, there is implemented a hierarchical SPB network that operates in a Multi-Site (MS) topology with the ability to provide both hyper scalability and secure access between the Sites: a MS-SPB network 100. The MS-SPB network 100 is deployed as a segmented SPB network with segments consisting of local Sites 102ᵢ (at least two) connected by the core Level 2 SPB network 101. The present technology provides a simplified model for configuration, operation and maintenance of both the network devices and the network resources spanning multiple Sites 102ᵢ of the MS-SPB network 100.

The nodes within Sites 102ᵢ operate at the IS-IS for SPB Level 1, together with SBNs 105ᵢₗ, establishing Level 1 adjacencies. The nodes connecting Sites 102ᵢ in turn operate at the IS-IS for SPB Level 2. The present technology may thus be considered an evolution of the single-tier/flat IS-IS for SPB Level 1 as specified in the IEEE Std 802.1Q-2018 standard.

Each Site 102ᵢ is identified by a unique Site-id and optionally, a Site-name. "Unique" here means that each site has a different Site-id. Optionally, the Site-id may be based on geographic location, for example of a set of its nodes. Each Site 102ᵢ features designated gateway nodes: the SBNs 105ᵢₗ that facilitate the inter-site communication. The SBNs 105ᵢₗ interconnect using circuits designated for Level 2 operation to form Level 2 adjacencies of the Layer 2 SPB network 101. Inter-site connectivity is provided by the Level 2 SPB network 101. Since the entire deployment is unified under a single SPB network, it will be apparent to the person skilled in the art, that the network service resources such as the Instance Service Identifier (ISID) and Virtual Private Network (VPN) routes may be carried across Sites 102ᵢ to provide seamless reachability across multiple sites for both Layer 2 and Layer 3 reachability.

The resource utilization in both the control plane and data plane of the SPB protocol are distributed between the Site 102ᵢ operating in the Level 1 network, and the Level 2 SPB network 101. All nodes in a Site 102ᵢ for a given i, may only have visibility of other local nodes (the BEBs 104ᵢⱼ and BCBs 103ᵢₖ) and the gateway nodes (the SBNs 105ᵢₗ) within the site. The Link-State Packet (LSP) distribution is contained to only the site local nodes. Similarly, the Level 2 SPB network 101 may only have visibility of the SBNs 105ᵢₗ spanning all the Sites 102ᵢ. The LSP distribution is contained to only the SBNs 105ᵢₗ. All inter-site connectivity is facilitated thru the SBNs 105ᵢₗ.

The achieved segmentation of resources provides for greater scalability for both the control plane and the data plane. When a Site 102ᵢ exceeds the available network capacity, or when there is a need to partition the Site 102ᵢ for segmentation, the Site 102ᵢ may be split to form new sites to accommodate the additional network resources. Green field SPB network (ie: "fresh" network with fewer constraints, as opposed to migrating an existing "brown field" network) deployments may be designed based on isolating groups of bridge nodes into sites considering the geography/location of the group. With the present technology, the MS-SPB network 100 deployment needs only be orchestrated in the SBNs 105ii. This means all site specific configuration (Site-id and, as the case may be, Site-name) and inter-site policy assignment may only be defined at SBNs 105ii. This simplicity of deployment also makes it easy to convert any existing brown field SPB networks to segmented MS-SPB networks, by deploying SBNs 105ᵢₗ to interconnect the segmented network with no changes needed in local nodes of the site.

Service extension/connectivity may optionally be isolated to the site, or auto distributed across sites or subsets of sites of the segmented network. For that purpose, a Policy Manager, as a known type of application operating on SBNs 105ᵢₗ may for example enforce security and/or border policies on the segmented network resources. Various rules may for example be configured by a network administrator in the Policy Manager to control the distribution on network resources both towards the inter-site network and towards the intra-site network, providing the flexibility to manage in a site what resources may be shared with another site of the network. In an aspect of the present technology, the same security and/or border policies are configured on all the peer SBNs of a given site.

Such a segmentation of the network provides the ability to support a network deployment which is orders of magnitude greater than the current limitation of 500 to 1000 nodes. The MS-SPB network 100 may be scaled up to support tens of thousands of nodes deployed across multiple sites of the tiered SPB network.

### MS-SPB network 100 configuration on the SBNs 105ᵢₗ and Site 102ᵢ discovery using IS-IS for SPB Level 2 circuits

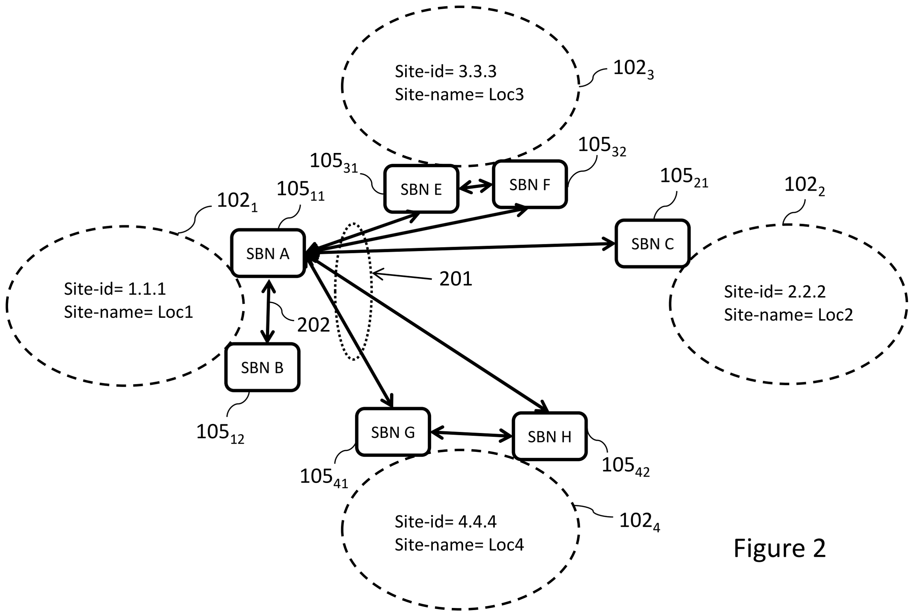

Figure 2 illustrates configuration of SBNs 105ᵢₗ and site discovery process, using the exemplary network architecture of Figure 1. The MS-SPB network 100 is configured with isolated Sites 102ᵢ. Each Site 102ᵢ is assigned a unique Site-id and, as the case may be, Site-name. For example, as seen Figure 2, Sites 102₁ to 102₄ are assigned respectively:
- Site-id: 1.1.1, 2.2.2, 3.3.3, 4.4.4;
- Site-name: Loc1, Loc2, Loc3, Loc4.
The Site-name may optionally be a string of characters that highlights the geographical location of the site.

The same unique Site-id and, as the case may be, Site-name, of a local site is configured on all SBNs of that local site (referred to as "peer SBNs"). For example, as regard Site 102₁, SBNs 105₁ₗ and 105₁₂ are both configured with a Site-id 1.1.1, and Site-name Loc1. The Site-id may be set to a 3-byte value and translate to the Area-id of the local site, that may be assigned as an area field of TLVs of control frames constructed and advertised by all SBNs of a given site, for all sites of the segmented SPB network, on each their IS-IS for SPB Level 2 interface, optionally also on each their IS-IS for SPB Level 1 interface. It will be apparent to the person skilled in the art that the ability to configure the Site-id/Area-id (in the IS-IS for SPB sense) of a given site in only the peer SBNs will avoid the need to update all the local nodes of the site (potentially several hundred nodes) with a unique Area-id. Typically, the nodes in the Level 1 network (the intra-site network) may not be configures with a unique Area-id for the IS-IS for SPB operation. Optionally they may be assigned a default Area-id 0.0.0.

Each Site 102ᵢ may be configured with one, two or more SBNs 105ᵢₗ. The peer SBNs operate in an all-active mode to provide both load-balancing and redundancy for the site local nodes' access to the resources on remote sites. Operational details are provided below.

All SBNs 105ᵢₗ in the MS-SPB network 100 are communicably connected with circuits designed to operate at Level 2 IS-IS for SPB. Such communication is operational after SBNs 105ᵢₗ are configured with the Site-id of the site of which they are peers. For example, the Site-id 1.1.1 configured in the SBNs 105₁₁ and 105₁₂, will be used as the Area-id by IS-IS for SPB when forming Level 2 adjacency with other SBNs in the Level 2 SPB Network 101.

This communication between SBNs 105ᵢₗ in the Level 2 SPB Network 101 may be either a ring or mesh topology. Optionally, a fully meshed Level 2 network between SBNs 105ᵢₗ may provide better link utilization and faster convergence of the Level 2 SPB Network 101. Reference 201 on Figure 2 illustrates the interconnections of SBN 105₁₁ with all other SBNs in the Level 2 SPB Network 101 in the case of fully meshed Level 2 network. It will be apparent to the person skilled in the art that such interconnections are not represented, but will occur, between each one of the SBNs 105₁₂, 105₂₁, 105₂₂, 105₃₁, 105₃₂, 105₄₁, and 105₄₂, and all the other SBNs represented on Figure 2.

A Path Tree and Equal Cost Tree (ECT) is computed for the Level 2 IS-IS for SPB circuits of the SBNs 105ᵢₗ operating in Level 2 SPB network 101. This ECT is separate from that of Sites 102ᵢ which operate in the IS-IS for SPB Level 1.

Optionally, each SBN may operate with a separate Backbone VLAN (BVLAN) for the Site 102ᵢ and the Level 2 SPB Network 101. This would in particular address the case of all Sites 102ᵢ not having a matching BVLAN, or not having the same ECT set. This further contributes to facilitating merging heterogenous sites (see below) into a MS-SPB network 100.

In order for inter-site connectivity, the various local Sites 102ᵢ only need to have a common BVLAN and ECT operation in the inter-site Level 2 SPB Network 101. A given ISID tunnel can operate in different BVLANs in the network for a Site 102ᵢ and the inter-site Level 2 SPB Network 101, while also providing the connectivity between the local Sites 102ᵢ.

The IS-IS for SPB protocol of each SBN 105ᵢₗ will compute and maintain a Shortest Path First (SPF) path with other SBNs discovered on the Level 2 adjacencies of the Level 2 SPB Network 101. This SPF path is independent of the SPF path computation that may occur for the Level 1 SPB network.

### Peer and remote SBN Level 2 adjacency process

In the following, SBNs 105ᵢₗ are also referred to as local (self) and remote (belong to a remote site) SBN. Each one of SBNs 105ᵢₗ may form Level 2 adjacencies with the other peer and remote SBN nodes, and compute the topology for reachability to all SBNs for the Level 2 IS-IS for SPB network. Thus ECT paths may be computed and programmed in the data plane for reachability among the SBNs 105ᵢₗ. The segmentation of the MS-SPB network 100 and its associated limited number of nodes participating in the SPB protocol in each segment (the SBNs) allows for rapid convergence.

Since each SBN 105ᵢₗ is able to determine all the Site-ids configured in the MS-SPB network 100 by parsing for the area address of the Level 2 LSP Protocol Data Unit (PDU) messages received from the remote SBNs, it may then become aware of:
- the available remote Sites 102ᵢ in the MS-SPB network 100, the number of such sites and the Site-id associated with each one of them; and
- the particular remote SBN(s) associated with each remote Site.
After Level 2 adjacencies are up and LSPs are updated, SBN 105ᵢₗ will have established inter-site connectivity between them.

Optionally, a link may be configured as a Level 1/Level 2 interface between peer SBNs, for example link 202 on Figure 2 between SBNs 105₁₁ and 105₁₂. Such a link may operate in both Level 1 and Level 2 IS-IS for SPB, to ensure there is no loss of inter-site connectivity if all of the Level 2 links of any one of SBNs 105₁₁ and 105₁₂ are down: inter-site connectivity thus becomes available through the peer link, ie: link 202, in both the Level 1 and Level 2 of the tunnel connections.

After Level 1 and Level 2 adjacencies are up, each SBN 105ᵢₗ may in addition become aware of peer SBNs 105ᵢₗ for a given Site 102ᵢ.

### Peer SBN discovery process

Each SBN 105ᵢₗ is further able to determine, discover and list all the particular peer SBNs also associated to the local Site 102ᵢ: when a SBN receives an IS-IS for SPB LSP PDU on the Level 2 circuits, it may check whether the Area-id in the LSP frame matches the locally configured Site-id. Optionally, each SBN 105ᵢₗ may also determine any peer SBN that is operating as an island (ie: connected at Level 2 level, but not Level 1).

Each SBN 105ᵢₗ is further able to compare with a list of discovered SBNs based on IS-IS for SPB LSP PDUs received on its Level 1 circuits, and maintain an active list of peer SBNs for the local site, based on the monitoring of PDU frames on both Level 1 and Level 2 LSP. This process forms the basis for instantiation of the Site Meta Nodes as described below.

### Meta Site logical representation

The process of orchestrating the inter-site Layer 2 and Layer 3 communication in the MS-SPB network 100 may be accomplished by establishing a logical representation of the network resources. Such a logical representation may include the following logical objects:

- Meta Site: a Meta Site may be viewed as a Transit site of the present technology, which captures information about all the sites (local and remote) and their associated SBNs, along with the resources and constraints being enforced by security policies at the local site by the local site SBN(s). This includes site information such as Site-id and, as the case may be, Site-name, the SBNs associated with the site, and the Layer 2 and Layer 3 VPN resources advertised by such SBNs. The Transit services that is orchestrated on the local SBN consists of both IS-IS for SPB Level 1 tunnels to the local BEBs/BCBs, and IS-IS for SPB Level 2 tunnels to the remote SBNs.

- Site Meta Node: a Site Meta Node allows to orchestrate the Meta Site functionality. In an aspect of the present technology, the Site Meta Node contains the summarized representation of all the sites and their associated nodes, in a representation design of all external sites, as well as of a neighbor list of the peer SBNs of the local site (self and discovered), maintained as per the peer SBN discovery process described above. The Site Meta Node is animated on all SBNs of each site, ie: a Site Meta Node is instantiated on each SBN allowing to represent all the discovered sites in the network, and is visible only locally, ie: intra-site, yet facilitates all inter-site communications from the local BEBs.

- Meta Site Meta Node: a logical representation of a super node, that provides access to all the Site Meta Nodes of the MS-SPB network 100. This only exists as a topology map.

The process of instantiating and maintaining the connectivity between local site and remote sites(s) by utilizing the logical representation above is accomplished by the following three steps:
- Meta Site exploration: discovering and maintaining site specific resources (ISID based Layer 2 VPN and Layer 3 VPN) from every site of the MS-SPB network 100;
- Meta Site orchestration: determining common/allowed resources between local site and remote site(s), to facilitate inter-site forwarding; and
- Site Meta Node animation: instantiating and maintaining the Site Meta Node and its LSP in the IS-IS for SPB Level 1, including the neighbor list (peer SBNs) of the Site Meta Node LSP; orchestrating the data plane Level 1 and Level 2 tunnels.

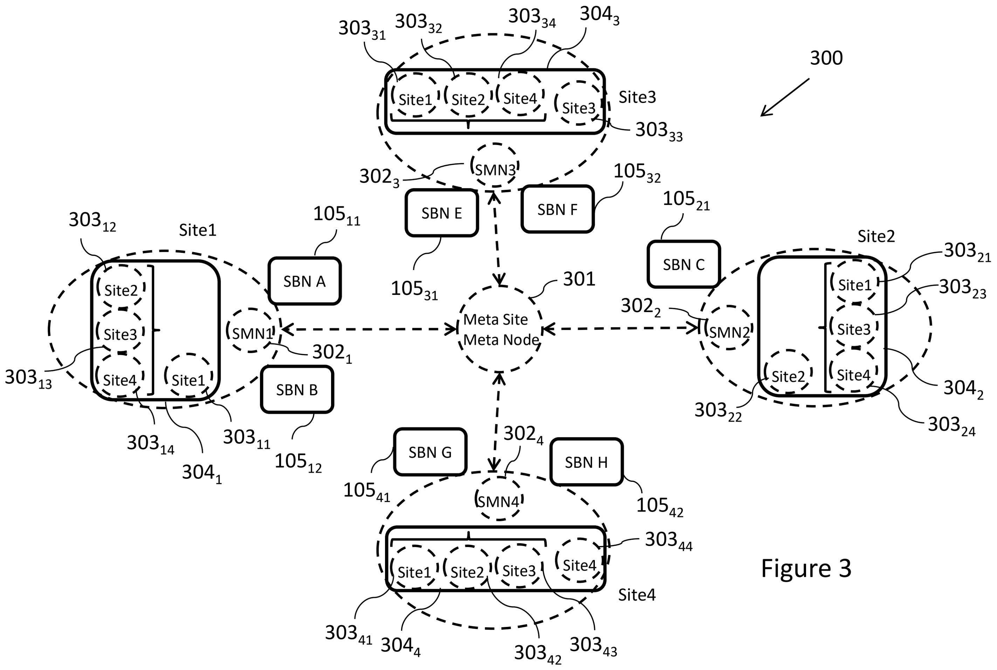

Turning to Figure 3: there is represented, as part of the logical representation 300:
- a Meta Site 304ᵢ, for each Site i, as a collection of remote and local site information 303ᵢₘ, (m=1 to max of i in the MS-SPB network 100) in particular as it relates to SBN 105ᵢₗ and site specific resources, to the extent visible to a respective Site i of the MS-SPB network 100; and
- a Site Meta Node 302ᵢ for each Site i.
The configuration of the Site-id and the IS-IS for SPB Level 2 adjacency on the SBNs 105ᵢₗ, as described above, may trigger the initiation and operation of this logical representation 300.

### Event list for the instantiating and maintaining of Site Meta Nodes

A Site Meta Node 302ᵢ is instantiated on each local SBN 105ᵢₗ. For a SBN 105ᵢₗ to initiate the instantiating, it must have at least one IS-IS for SPB Level 2 adjacency established with a remote SBN. Additionally, the peer and remote SBN Level 2 adjacency discovery process described above will have populated the remote and peer site information to the Site Meta Node.

The Site Meta Node 302ᵢ is instantiated in the Level 1 network of the local Site i by generating a Site Meta Node LSP in the IS-IS for SPB Level 1 network (intra-site network as represented by 102ᵢ). The Site Meta Node 302ᵢ is animated using a network unique System-id as required by IEEE standard 802.1Q-2018 (IS-IS for SPB Link State Protocol). "Unique" here means that the Site Meta Node System-id is different from all other System-ids in the network (of SBNs, other nodes, etc.). The Site Meta Node System-id may be the concatenation of the 3-byte Organization Unique Identifier (OUI) and the 3-byte Site-id/Area-id. This results in a network unique 6-byte System-id that represents the Site Meta Node to the local site. The combination of the OUI and the Site-id as part of the System-id makes the Site Meta Node LSP stand out in the intra-site LSP database on any node in the local site network. The network administrator may then be able to identify that the Site Meta Node is operational, and also inspect the contents of this LSP. This instantiation of the Site Meta Node on all the peer nodes will provide the all-active load-balancing and redundancy for inter-site communication from all the local BEBs 104ᵢⱼ in the local Site i.

This instantiation and management of the Site Meta Node LSP on SBNs 105ᵢₗ may be based on either one of two mechanisms of operation:
Designated Animator (DA): after a SBN 105ᵢₗ discovers the peers among the SBNs 105ᵢₗ of the local site, one of the peer SBNs 105ᵢₗ is elected as the DA. This election may for example be based on the SBN 105ᵢₗ with the lowest System-id that is advertised in the Level 2 LSP. Only the SBN 105ᵢₗ elected as the DA, and no other SBN, may animate and generate the Site Meta Node LSP for the IS-IS for SPB Level 1 network (intra-site network). The DA may instantiate the Site Meta Node LSP with all the peer SBNs of the local site as the neighbor nodes of the Site Meta Node. The other peer SBNs of the site will treat this Site Meta Node as a network LSP. However, all the peer SBNs (DA and non-DA) which have the Site Meta Node operation enabled (after at least one IS-IS for SPB Level 2 adjacency enabled), will use the Site Meta Node LSP as the root for running the Level 1 SPF operation.

In case the DA is removed, as a removed node from the system, peer SBNs will discover this removal thru the Level 2 LSP updates. In such a case, the SBN with the next lowest System-id may take over as the DA for the site. As such, it will convert any existing Site Meta Node from the network LSP to the self Site Meta Node LSP, and regenerate the Site Meta Node LSP to the intra-site IS-IS for SPB Level 1 network, to refresh all nodes with the updated status.

The advantage of DA_mechanism is that only the DA needs to animate the remote site(s) ISID and routing resources in the Site Meta Node LSP. As such it does not need to maintain any order in which the resources are added to the LSP since there is only one owner to animate and manage this LSP.

Alternatively, All Animators: each SBN of the local site will instantiate the same Site Meta Node LSP on its local node, as a self-generated LSP on each peer SBN. This Site Meta Node LSP will be created with all the peer SBNs of the local site as the neighbor nodes (the peer SBNs were discovered through the peer SBN discovery process described above). In this process each SBN will have to animate the remote site ISID and routing resources in the same order as other peer SBNs.

In either of the two animation mechanisms above, a special audit may be performed to ensure that the animation of the Site Meta Node LSP is uniform across all the peer LSPs. When a SBN receives the Site Meta Node LSP from another peer SBN, it may audit the Type Length Value (TLV) information of the received LSP with its local Site Meta Node resources (Layer 2 and Layer 3 ISID resources of the remote sites) to check for any inconsistencies in the advertised resources (Layer 2 and Layer 3 objects) among the peer nodes. The network administrator may be notified in case the audit fails. A sequence number refresh may be performed to ensure the self-generated Site Meta Node LSP always reflects the latest sequence number. The checksum may also be updated after any audit updates to the Site Meta Node LSP such that the Site Meta Node LSP is always in sync across all the peer SBNs.

In the case of the DA mechanism above, only the DA SBN may update the Site Meta Node LSP sequence Number and checksum whenever there in an update to the resource information being advertised by the Site Meta Node LSP.

In case of All Animators mechanism above, the update to the Site Meta Node LSP by any one SBN will cause it to regenerate an updated Site Meta Node LSP to the local site. This LSP will also have the sequence number, checksum and remaining-life fields updated. When the peer SBN receives this Site Meta Node LSP it will trigger the Site Meta Node LSP audit on each SBN. If the Site Meta Node LSPs MT and Reach TLVs are in sync between the peer SBNs: the Site Meta Node LSP will also maintain a separate MetaRemainingLifeTime field separate from the LSP remainingLifeTime field. During the Site Meta Node LSP audit, this new field will be updated to reflect the largest remaining lifetime value among all the instantiations of the Site Meta Node LSP across the peer SBNs. The Level 1 SPB-IS-IS will use this lifetime value when sending Partial Sequence Number PDU (PSNP) updated to the adjacent nodes to ensure the Send Router Message (SRM) and Send Sequence Number (SSN) operations between the adjacencies will not be affected by the Site Meta Node instantiation.

### Path computation:

The peer SBNs must run two SPFs for the Level 1 network. A first SPF run based on the root node of the local SBN, to determine the intra-site reachability from the local node. A second SPF run based on the root node of the Site Meta Node and is termed as the "Meta SPF". This Meta SPF will be run on all the peer SBNs of the site using the common Site Meta Node LSP that has been animated across the peer Nodes. This SPF will establish the path connectivity from the Meta Node to the intra-site nodes (BEBs and BCBs).

The path metric for each SBN neighbor of the Site Meta Node must set to the maximum supported metric value. This maximum metric value is required in order to ensure that the logical Site Meta Node entity will itself not be considered as an intermediate path node during path computations among the intra-site nodes. Essentially the Site Meta Node should only operate as the end point of the intra-site IS-IS for SPB Level 1 network and never as a Backbone Core Bridge (BCB).

All the BEBs and BCBs in the local site will receive and process the Site Meta Node LSP. Each node will run the path computation to the Site Meta Node and establish the shortest path to the Site Meta Node. This is essentially the shortest path to a local SBN which is hosting the Site Meta Node. ECT paths will also be established to allow for load distribution among the peer SBNs.

On the local SBNs, the IS-IS for SPB Level 1 SPF will compute path information for the Site Meta Node to all the nodes in the local site. Path computation is per BVLAN/ECT using the procedures described in RFC6329. The Site Meta Node will have all the SBNs (self and peer) as the neighbor nodes for the path computation.

Thus, each SBN may maintain three separate path lists for the IS-IS for SPB SPF computation:
- a Level 1 path list to compute the intra-site connectivity from the local/self SBN to all the nodes in the site;
- a Level 1 path list to compute the Site Meta Node connectivity to all the nodes in the Site; and
- a Level 2 path list to compute the inter-site connectivity among all the SBNs in the core inter-site network (Level 2 SPB Network 101).

Path ownership from Site Meta Node to any node in the local site may be determined per Backbone VLAN ID (BVID)+Backbone MAC (BMAC) tuple for each node in the local site.

Only the path with the local SBN as the next hop is instantiated in the data plane. If the route is determined to have the next hop of another peer SBN, that tuple will not be instantiated in the data plane with the knowledge that another peer SBN has a better path to the local node (BEB, BCB). This operation also guarantees path symmetry and congruency between the Site Meta Node and the local nodes of the local site.

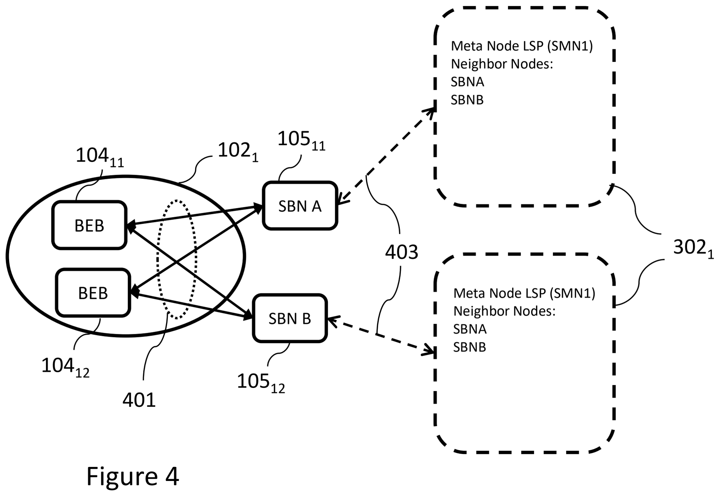

Figure 4 depicts an intra-site IS-IS for SPB Level 1 network with Site Meta Node LSP animation in relation to the particular Site 102₁. Physical links 401 between the BEBs (104₁₁ and 104₁₂) and SBN 105₁₁ and 105₁₂ have been represented. BCB nodes have been omitted for the sake of simplicity of the representation. The sequence of steps to initiate the instantiating of, and to maintain, the Site Meta Node, is detailed below:
- each of SBN 105₁₁ and 105₁₂ may create a Meta Site object which captures the multi-site resources of the MS-SPB network 100, then initiate the instantiating of a Site Meta Node, as a logical representation of all the remote sites;
- the Site Meta Node SMN1 (302₁ on Figure 3) is instantiated in the Level 1 network of the local Site 102₁ by generating a Site Meta Node LSP in the IS-IS for SPB Level 1 network (intra-site network). Each of SBN 105₁₁ and 105₁₂ will instantiate the same Site Meta Node LSP on its local node, as self-generated LSP on the SBN. This Site Meta Node LSP will be created with all the peer SBNs of the local Site 102₁ as the neighbor nodes (so in the represented case: SBN 105₁₁ for SBN 105₁₂, and vice versa), that will have been discovered using the Peer SBN Discovery Process above. The path metric for each SBN neighbor of the Site Meta Node will be set to the maximum supported metric value. This ensures that the logical Site Meta Node entity will itself not be considered as an intermediate path node during path computations among the intra site nodes. Essentially the Site Meta Node should only operate as the end point of the intra site IS-IS for SPB Level 1 network, and never as a BCB.
- all the BEBs (104₁₁ and 104₁₂) and BCB nodes (not represented on Figure 4) in the local site receive and process the Site Meta Node LSP. Each such node then runs the path computation to the Site Meta Node and establishes the shortest path to the Meta Node. This is essentially the shortest path to a local SBN node which is hosting the Site Meta Node. ECT paths may also be established to allow for load distribution among the peer SBNs. SPB tunnel is set up between the BEBs 104₁₁ and 104₁₂ and the Site Meta Node 302₁ through Meta links 403. This Site Meta Node 302₁ will represent all the external site resources to the intra-site network. According to the implementation of all-active mode of the present technology, the load-balancing and failover mechanism is seamlessly integrated. The BEBs (104₁₁ and 104₁₂ in the example of Figure 4) may establish a per tuple (BVLAN + BMAC) tunnel to the Site Meta Node (302₁ in the example of Figure 4) such that the tunnels can be load-balanced per ECT (BVLAN) between the peer SBNs (105₁₁ and 105₁₂ in the example of Figure 4) . This is due to the fact that the Site Meta Node LSP is animated with the local peer SBNs as its neighbor nodes with equal cost to the Site Meta Node. By applying the ECT algorithm of RFC 6329 (section 12), each BEB may setup a unique tunnel path per BVLAN (ECT) to the Site Meta Node such that the tunnel will terminate on a different peer SBN per ECT. Additionally in the event one of the peer SBNs were to go offline in the local site, the Site Meta Node will be animated such that this SBN is no longer in the neighbor list of the Site Meta Node LSP. An updated Site Meta Node LSP is advertised from the SBNs to the local site. The local BEBs will recompute the tunnel path and failover the tunnel path to the available set of peer SBNs. Active load balancing among the peer SBNs is thus provided for inter-site connectivity, and also seamless failover in case of a SBN failure. This enables stability, simplicity, and robustness for a hyper scalable MS-SPB network according to the present technology.

### Maintaining the Neighbor list of the Site Meta Node

As a reminder, for a SBN 105ᵢₗ to instantiate a Site Meta Node, it must have at least one IS-IS for SPB Level 2 adjacency established with a remote SBN. If a Site Meta Node was previously enabled, and there is no such Level 2 adjacency, the Site Meta Node gets removed. Further, in order to build the Site Meta Node, the SBN must have discovered the other peer SBNs in the network, that will form the neighbor list of the Site Meta Node, and that are also required to build the Site Meta Node LSP frame.

Upon receiving the Level 2 LSP from a peer SBN (same Site-id), the local SBN will also verify if there is a corresponding Level 1 LSP update for the same peer SBN:
- if the peer SBN LSP is present in both Level 1 and an active Level 2 with a remote SBN, this peer SBN is added as a neighbor for the Site Meta Node 302ᵢ;
- if the peer SBN LSP is not present in Level 1, the local SBN will wait for the expiry of the hold time before checking for the Level 1 LSP status of the peer SBN: in case there is no Level 1 LSP update, it is assumed that the peer SBN is operating as an island in this local site. The Site Meta Node neighbor list is constructed without this peer SBN. Optionally, the Site Meta Node neighbor list may reflect this status of the peer SBN, and this status may be used to generate a trap for having to fix the Level 1 network to avoid the presence of islands in the local network (peer SBNs not visible to each other in the Level 1 network).

Aa a result of this process:
- duplicate Site-id configurations may be discovered across the SPB network; and
- no remote SBN may be included in the Site Meta Node neighbor lists since no Level 1 LSP update may be received from such a remote SBN.

The Site Meta Node hold timer is activated after any changes to the Site Meta Node neighbor list. The Site Meta Node will be updated in both the control plane (Site Meta Node LSP) and data plane after the hold time expiry if there were any changes to the Site Meta Node neighbor List or the distribution of the inter-site Layer 2/Layer 3 resources.

Optionally enough time is allowed before operation of the network, for all the peer SBNs to reflect the same changes to their instantiation of the Site Meta Node, resulting in the same information including the Site Meta Node neighbor list service resources associated with the Site Meta Node. This is to ensure robustness of the multi-site SPB Network according to the present technology.

With the above Site Meta Node neighbor list and the configured Site-id, the SBN is able to animate/build the LSP PDU to represent the Site Meta Node to the local site. The management of the LSP associated with the Site Meta Node can be based either on the DA mode or the All Animators mode as explained above. As explained below, the Layer 2 and Layer 3 ISID resources may be added subsequently to the Site Meta Node LSP, based on the discovery of remote site resources and applying the local site resource distribution security policies, that may for example without limitation, be setup by the network administrator, to control which Layer 2 and Layer 3 objects can be distributed across sites. This security policy-based control can be enforced for both intra-site or inter-site resource distribution.

### Inter-Site Service connectivity for MS-SPB: Service Stretching (LSP mining)

The Meta Site exploration as explained above will automate the discovery of ISID resources deployed across the MS-SPB network and establishment of inter-site ISID tunnels.

Each SBN in the MS-SPB network will gather all the operational ISIDs in its local site to determine if there is a match in resources across the sites. This may be accomplished on the local SBN by mining the LSP information from all the local BEBs of the local site to determine the list of operational ISIDs in the site. Each SBN may then advertise this ISID resource list to the other SBNs on remote sites as part of the Level 2 LSP advertisement.

When two SBNs residing in remote sites determine a common/matching ISID resource, an inter-site tunnel is established for this service to facilitate inter-site forwarding of the service.

Since it has been discovered that the ISID resource is also operational in a remote site, the local SBN will propagate this ISID to the Site Meta Node. The Site Meta Node will animate this ISID in the Site Meta Node LSP and propagate this in the local site. The BEBs in the local site will process this Site Meta Node LSP update and establish tunnel to the Site Meta Node that is hosted on the local SBN. This operation of LSP mining will stretch the service across sites and facilitate inter-site connectivity.

The local SBN will also setup ISID tunnel to the local BEBs that have a path to the Site Meta Node thru the local SBN. If the path ownership from the Site Meta Node to the BEB is not thru this local SBN for the given ISID BVLAN/ECT, it will skip establishing the data path with the expectation that another peer SBN with a better path to the BEB will establish the ISID tunnel.

To secure the service access to be limited to the local site and prevent the resource from being advertised to any remote sites, security policy constraints may be introduced on the local SBNs to determine if they can establish inter-site tunnels for a given ISID resource. Other security policies may also be defined to allow access to only a subset of remote sites. The present technology thus provides security, flexibility and ease of configuration in order to facilitate inter-site connectivity for the SPB ISID resources.

The Site Meta Node ISID resource distribution for the local site is derived based on the LSP mining procedure described above. For the MS-SPB network 100, the ISID mining procedures on peer SBNs of Site1 102₁ (SBN A 105₁₁ and SBN B 105₁₂) will auto discover a subset of ISIDs that are common between the local site and the set of remote sites. This ISID list can be represented with the formula below and will be orchestrated in the Site Meta Node in order to provide the inter-site ISID connectivity.

A sample representation of the service animation for the network of Figure 1 is summarized below:
- the Site Meta Node of Site1: Intersect (Union (Site2, Site3, Site4), Site1)
   -or-
   ∩ (U(Site2, Site3, Site4), Site1)
- Site1 Transit services: Union (SBN A, SBN B) -or- ISID U(SBN A,SBN B)

The ISID list will then be animated in the Site Meta Node LSP and the LSP be advertised in the intra-site Level 1 network in order for the local BEBs to form tunnel connections to the Site Meta Node and gain inter-site reachability. Security policies related to service distribution conditions defined on the SBNs will further control the ISID advertisement for both the Site Meta Node and Level 2 LSP distribution between SBNs.

### Inter-Site Service connectivity for MS-SPB: Data path for a multi-site SPB network

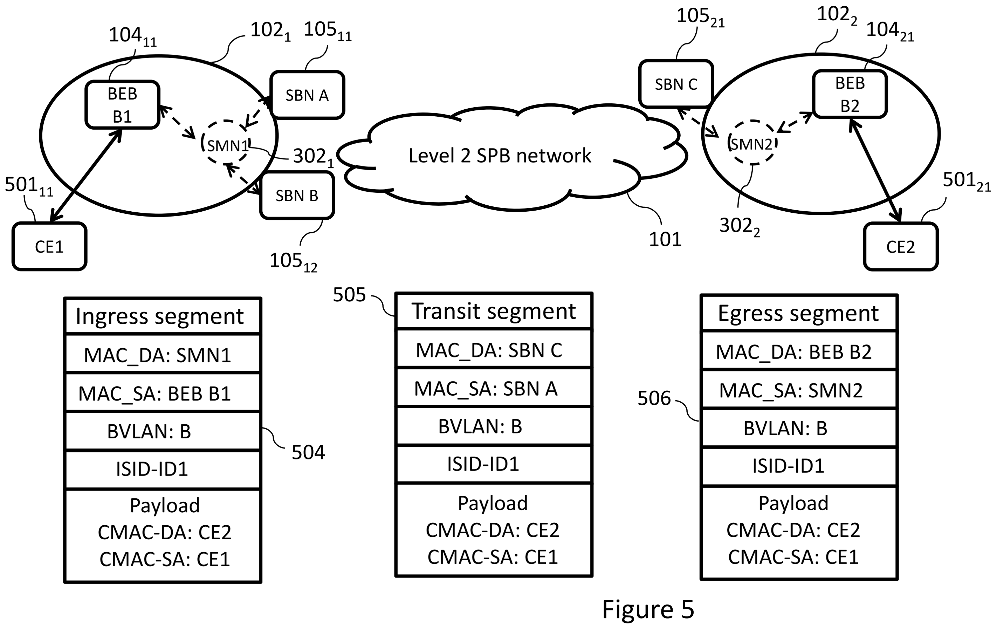

As shown Figure 5, the inter-site forwarding data path consists of three distinct segments 504, 505 and 506, when two Customer Edge (CE1 and CE2) devices 501₁₁ and 501₂₁ connect.

The intra-site Ingress segment 504 where the BEB B1 104₁₁ will forward the SPB frame to the Site Meta Node SMN1 302₁ hosted on the SBNs 105₁₁ and 105₁₂. Here the encapsulation will have the source (MAC_SA) as BEB B1 104₁₁ and destination (MAC _DA) as Site Meta Node SMN1 302₁ address. The destination MAC-DA SMN1 here is the network unique Site Meta Node System-id that was generated with the concatenation of the 3-byte OUI and 3-byte Site-id. BEB B1 104₁₁ will have established the tunnel end-point to only one of the local site SBNs based on shortest path computation between BEB B1 104₁₁ and SMN1 302₁. Upon tunnel termination on the SBN (in the case represented: SBN A 105₁₁), the CE1 501₁₁ MAC address is learnt on the SBN A 105₁₁ for the tunnel pointing to BEB B1 104₁₁. The SBN will lookup the Destination MAC address for CE2 501₂₁ in the ISID-ID1. If the lookup is successful, the frame will be forwarded to the remote SBN (in the case represented: SBN C 105₂₁) on the Level 2 tunnel between the SBNs. If the lookup is not successful, the frame will be flooded by SBN A 105₁₁ to all available Level 2 tunnels of ISID-ID1. The split horizon checks will prevent the frame from being flooded to Level 1 tunnels of the ISID-ID1 such as to avoid a loop in the intra-site network.

The inter-site Transit segment 505 where the SPB frame is forwarded from a SBN (in the case represented: SBN A 105₁₁) on a local site, to a SBN (in the case represented: SBN C 105₂₁) on a remote site. Here upon tunnel termination, the CE1 501₁₁ MAC address is learnt on the SBN (in the case represented: SBN C 105₂₁) for the tunnel pointing to remote SBN (in the case represented: SBN A 105₁₁).

The intra-site Egress segment 506 where SBN C 105₂₁ will forward the SPB encapsulated frame to the local BEB B2 104₂₁. The source node here will be the Site Meta Node SMN2 302₂ address for the Site Meta Node hosted on SBN C 105₂₁. Here the forwarding will be based on the successful lookup of Destination MAC address for CE2 501₂₁. In case the address is not found on the SBN, it will be flooded to all the Level 1 tunnels of the ISID-ID1. The split horizon checks will prevent the frame from being flooded to Level 2 tunnels of the ISID-ID1 such as to avoid a loop in the inter-site network.

All SBNs will prevent forwarding traffic received from a SPB tunnel of one remote site onto another tunnel of a different site. The ISID tunnels established in the IS-IS for SPB Level 2 network between the SBNs will operate in a different split horizon group relative to the IS-IS for SPB Level 1 tunnels established between the BEB and the Site Meta Node. The forwarding of traffic between tunnels of the same group are disabled. But forwarding between the two tunnel types is permitted (ie: between Level 1 and Level 2). This split horizon setup follows the procedures as described in IEEE 802.1aq. This procedure is essential to avoid looping the traffic in the core network.

The BEBs of the intra-site network establish tunnels only to the Site Meta Node in order to setup inter-site connectivity. This summarization of the entire inter-site network thru only the Site Meta Node allows the data plane to achieve hyper scalability and access resources on tens of thousands of nodes in remote sites without needing explicit connection to each tunnel end point spanning across many inter-site networks.

### Inter-Site Service connectivity for MS-SPB: Service tandem mode of operation

A service ISID may still per the present technology be configured to operate in Tandem Mode (aka Bud Mode) in order to reduce the broadcast traffic in the network. As is known, in the MS-SPB topology, each section (Ingress, Transit and Egress) of a service ISID may be independently configured to operate in Head-end or Tandem mode based on the network requirement.

Enabling however the Tandem Mode operation on the Transit path may result in the data frame being forwarded to all the sites of a MS-SPB network (PtoMP) relative to the HeadEnd mode which is PtoP. Such PtoMP flooding may ignore security and/or border policy constraints which limit the service reachability to specific sites. Optionally, head-end based services only are used in the Transit zones when strict service isolation is desired between the sites of the MS-SPB.

### Detection and prevention of backdoor access

In a multi-site SPB topology as in the present technology, all traffic forwarded between Sites 102ᵢ (inter-site traffic) is only between the SBNs 105ᵢₗ of the sites. Inter-site tunnel paths are only established in the core Level 2 SPB network 101 to facilitate this connectivity. To detect and handle events of configuration or deployment of the network where a local node (BEB 104ᵢⱼ or BCB 103ᵢₖ) of a Site 102ᵢ could have setup a backdoor link to another node BEB 104ᵢⱼ or BCB 103ᵢₖ in a remote site, a mechanism for loop prevention may optionally be implemented according to the present technology.

The mechanism according to the present technology will depend on the type of network deployment:
- in the case of a green field deployment: for any given Site 102ᵢ, all the SPB nodes (SBNs 105ᵢₗ, BEB 104ᵢⱼ and BCB 103ᵢ) should be configured with the same Site-id. During the establishment of the Level 1 SPB IS-IS adjacency, the Site-id check is performed, and adjacency is established only if the Site-id is configured and matches on all the Level 1 circuits of each node. This check prevents establishing the SPB adjacency between backdoor links, and detects misconfigured or missing Site-id on any node in the network.
- in the case of a brown field deployment: the intra-site nodes are running on legacy code that lacks the MS-SPB functionality. Since no area checks are performed on such nodes, they may establish a backdoor adjacency and data channel for inter-site forwarding outside the mandated path of the traffic traversing thru the SBNs of the sites. Such connections may create both an issue of traffic loop for the network which could lead to a network meltdown and a security breach, where the intra-site nodes bypass security policy constraints enforced by the local SBNs 105ᵢₗ. The following process may be implemented to detect such loopholes and trigger remedial actions including shutting down the local SBN 105ᵢₗ operations and alerting the network administrator about the breach.

Step 1: detection of remote Site Meta Node LSP during Level 1 LSP processing: each SBN 105ᵢₗ monitors the Level 1 LSP database for the presence of any additional Site Meta Node other than the Site Meta Node of the local site. A simple check on the OUI and Site-id (derived from the System-id of the LSP-ID) of all received LSPs may reveal the presence of a leaked Site Meta Node LSP of the remote Site from the back-door connection. Additionally, the neighbor list of the local Site Meta Node LSP may also be inspected to ensure the Site Meta Node adjacencies only contain the local SBN. Otherwise it is deemed as a leaked Site Meta Node LSP from a remote site.

For example, and by reference to figures 1 and 3: SBN A 105₁₁ of Site1 102₁ detects the presence of alien Site Meta Node LSP SMN2 302₂ from Site2 102₂. During the Level 1 LSP process, the OUI check is performed on the received Level 1 LSPs. This determines the presence of alien Site Meta Node LSP SMN2 302₂ which has a different Site-id component from the local Site Meta Node LSP SMN1 302₁. This causes the SPF run of the Level 1 LSP to raise an alert to the next run of the Meta SPF, for example of the type: "L1-LSP-Loop-Dectected Alert for Alien-LSP-ID: SMN2".

Step 2: detection of remote SBN LSP during Level 1 LSP processing: to address the case when the Site Meta Node operation is down in the remote Site to which there is a backdoor connection, the backdoor loop may be detected by checking the presence of a remote SBN being leaked to the local Level 1 LSP database. The Level 2 SPF run on the local SBN will have gathered all the remote SBNs and the associated Site-ids. During the LSP processing of the Level 1 LSPs, each LSP may be checked for its presence in the Level 2 LSP database which would only contain the remote SBNs. The System-id of the Level 1 LSP is compared for a match with the System-id of the Level 2 LSP database. If a match is found, this indicates the presence of a backdoor loop. Path inspection of the alien LSP during the Meta SPF run may occur.

For example, and by reference to figures 1 and 3: SBN A 105₁₁ of Site1 102₁ detects the presence of alien LSP SBN C 105₂₁ from Site2 102₂. During the Level 1 LSP process, if the OUI check does not detect an alien Site Meta Node LSP, the LSP processor on SBN A 105₁₁ checks the received LSP-ID for a match in the Level 2 LSP database (which contains LSP SBN C 105₂₁). A match in the Level 2 database will indicate a backdoor loop between the two sites. It is to be noted that if the Meta operation was not enabled on Site2, then Site Meta Node SMN2 302₂ would not be published in the network. However, the Level 1 LSPs of SBN C 105₂₁ will be distributed by the BEB 104₁₁ to the local Site1. This will cause the Level 1 LSP to raise an alert to the next run of the Meta Node SPF, of the type: "L1-LSP-Loop-Dectected Alert for Alien-LSP-ID: SBN C".

Step 3: when the presence of an alien LSP is detected on a local SBN, the Meta SPF as defined above may be notified to determine the path to the alien LSP during the next SPF run. At the end of the next Meta SPF run, it may determine the Level 1 path to this LSP, and publish this path to the network administrator to help with determining the offending nodes in the network. In the meantime, the Site Meta Node operation may be shut down on the SBN until any backdoor loop is fixed.

In relation to the two examples provided just above: during the next run, Meta SPF will discover the L1-LSP-Loop-Dectected Alert has been raised. At the end of the Level 1 Meta SPF run, SBN A 105₁₁ will publish the path to the flagged alien LSP before shutting down the Site Meta Node operation on SBN A 105₁₁, for example:
- if Destination Node SMN2 302₂: "Path SMN1 302₁ -> SBN A 105₁₁ -> BCB 103₁₁ -> BEB 104₁₁ -> BEB 104₂₁ -> BCB 103₂₁ -> SBN C 105₂₁";
- if Destination Node SBN C 105₂₁: "Path SMN1 302₁ -> SBN A 105₁₁ -> BCB 103₁₁ -> BEB 104₁₁ -> BEB 104₂₁ -> BCB 103₂₁".

With an appropriate system naming convention, the network administrator should be able to determine that the backdoor link between BEB 104₁₁ (Site1) and BEB 104₂₁ (Site2) is the cause of the loop. The error notification to the network administrator may be in the form of a trap raised to rectify the configuration error. The trap may provide additional information about the path details of the leaked remote Site Meta Node LSP, or the SBN of the remote site to help best determine the offending local BEB of the local site.

### Network evolutions

Large networks are often spread across multiple locations geographically apart but interconnected together. Oftentimes, these networks grow over a period of time (brown field networks). The present technology provides the runway to grow these networks organically or interconnect independent SPB networks together with the least amount of disruption. Further, there may be a need in large networks to merge different SPB networks or split an existing large SPB network into several smaller segments to reduce the complexity of the control plane, or to enforce security policies between different locations. On other occasions, there may be a need to add a site or remove a site from the network. The present technology provides a very efficient and simple method to achieve the integration or subdivision of networks.

To partition an existing network, an existing node may be converted to a SBN, or additional SBNs may be added to the network at the logical borders of sites (or within a site, for redundancy and load sharing), by configuring a Level 2 interface on a node to enable it to act as a SBN. In this context:
- a site may be a logical grouping of nodes (both BEB and BCB) that share a globally unique Site-id Level 1 address. All nodes within the Level 1 share the same Area-id and follow the SPB constructs within the site. Each LSP within an area does not traverse outside the area and adjacencies are formed within each area;
- the Site-id is configured at each of the created SBNs and distributed as Area-id by SBNs on Level 2 interfaces;
- each site may have its own control plane along with the control BVID, which may be relevant only within the site. All sites can share the same control BVID but there is no need to enforce this requirement. A different BVID in the Level 2 domain or in another site is a sensible possibility. Tunnels within the site terminate at the SBN.

Thus, steps involved to partition a network:
- create sites (split existing Level 1 networks):
- configure each SBN with a Site-id of the site it is associated with (translates to unique Area-id for Level 1/Level 2 nodes);
- instantiate a Site Meta Node for each SBN of each site;
- activate SBNs with Level 2 links between them. This will instantiate a Site Meta Node as a Level 1 node in the local Level 1 network.;
- configuration on Level 1 nodes remains unchanged (with Area-id=0).

Getting back to a single domain flat SPB network on the contrary merely requires removal of SBN configurations. No other changes are required in the Level 1 network. The simplicity and ease with which this can be achieved seamlessly fit into effective but simple network partitioning or integration as per the need for network evolutions.

Thus, steps involved to merge a network:
- merge sites (a Level 1/Level 2 network into Level 1 network);
- remove and purge Level 1 Site Meta Node. Configure the Level 2 link between SBNs as the Level 1 link.
- delete Site-ids (unique Area-ids): the default Area-id for Level 1 nodes remains Area-id=0.

### Homogeneous or Heterogeneous MS-SPB network design

As is known to the skilled person, The 3 invariant configurable parameters in a flat SPB network are Area-id, BVID and ISID (RFC 6329, 7623 and 7734). According to the present technology, these 3 parameters may be the same across the Sites 102ᵢ and the Level 2 network 101 (homogeneous solution for green field networks), or 1, 2 or 3 of them may be different across the Sites 102i and the Level 2 network 101 (heterogeneous solution for brown field networks). In case a parameter is different across Sites 102ᵢ, translation occurring at the SBNs facilitates integration of the Sites 102ᵢ. A Policy Manager residing on each SBN may enforce this border policy and perform the translation when Level 2 LSPs are sent across sites. This provides a simple and efficient method to facilitate each site to evolve independently, and to help the network administrator handle the combinational complexity of these 3 parameters across sites.

Control BVIDs may be different across the Level 1 and Level 2 domains. Integration of a new site with a different control BVID into the global network only requires addition of the SBN resource. The local site's control BVID may be unique compared to the other sites and terminate at the SBN. The control BVID in the Level 2 may be configured on the Level 2 interfaces on the SBN. This flexibility makes integration of a new campus vertical, or addition of a new site much simpler from a network administration point of view. As the ingress tunnel terminates at the SBN and an independent control plane exists in the Transit tunnel, BVIDs within the Transit tunnel remain in context only within the fabric. The logical extension of the heterogeneous BVIDs concept is the support of the duality in the Layer 2 multicast options (BUM traffic). Choice of head-end or tandem within one site is agnostic to the transportation mode in the Level 2 tunnels. This gives the flexibility for the network administrator to choose the optimum replication mechanism within each site. It should be noted that even though used in the singular in the above, the network administrator generically designates any person that has at least minimum administration level relative to the network.

Area-id may be unique to each local site. The same Site-id is configured on all the peer SBNs of a local site. Level 1 interfaces on the SBN match with the Area-id of the nodes within the site. SBNs may use this Site-ID as the local area id when forming Level 2 adjacency with other SBNs. A separate BVID may also be configured for the Level 2 SPB circuits if the control BVIDs are disparate across the sites as per the foregoing paragraph. SBNs create a separate SPF path for Level 2, independent of the Level 1 circuits. Merging or splitting of a network is thus achieved through easy to manage configurations changes to the SBNs.

ISID stretching as described above, is performed at the SBNs. If an existing site is to be split, the ISIDs (services) are already configured and there is no need to translate the ISID across the Transit tunnel. On the other hand, if a new site is to be integrated with an existing site, the new site could have different ISIDs compared to the existing site and will need to be translated to perform ISID stretching. This is performed at the SBN when the ingress tunnel terminates at the local SBN. Thus, sites have different ISIDs may be integrated/merged. Along with the security policies (permit or deny ISID stretching), a lookup is performed at the termination of the ingress tunnel by the SBN to translate the ISID to the appropriate ISID for the destination site. For example, a Human Resources-related service in Site1 and Site2 could have different ISIDs and there wouldn't be a need to reconfigure the ISIDs in either site. The enforcement of the translation on the SBN would extend ISID stretching and restrict the configuration changes thereby simplifying the integration of the sites.

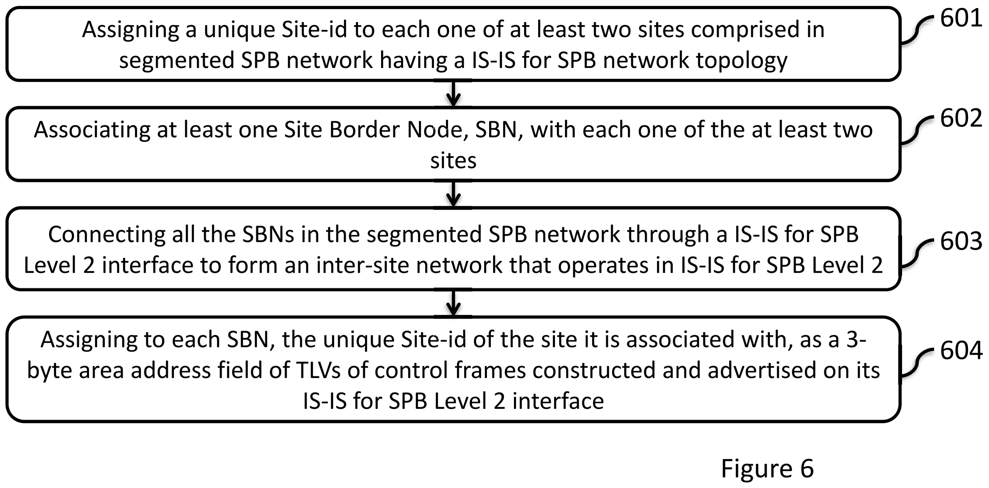

Figure 6 depicts computer-implemented method steps according to one aspect of the present technology. This first aspect of the method may for example be involved when building a segmented SPB network from an existing brown field SPB network. At step 601, a unique Site-id may be assigned to each one of at least two sites comprised in a segmented SPB network having a IS-IS for SPB network topology. "Unique" here means each site is assigned a different Site-id. At step 602, at least one SBN may be associated with each one of the at least two sites. At step 603, all the SBNs in the segmented SPB network may be connected through a IS-IS for SPB Level 2 interface to form an inter-site network that operates in IS-IS for SPB Level 2. At step 604, the unique Site-id of the site each SBN is associated with, may be assigned as a 3-byte area address field of TLVs of control frames constructed and advertised by the SBN on its IS-IS for SPB Level 2 interface.

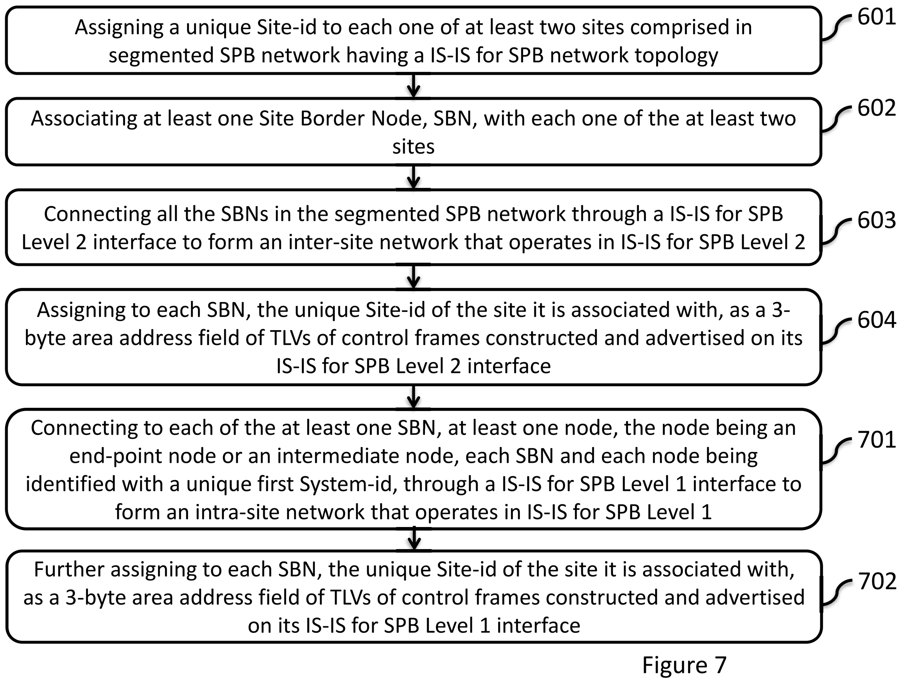

Figure 7 depicts computer-implemented method steps according to a second aspect of the present technology. This second aspect of the method may for example be involved when building a green field segmented SPB network. In this second aspect, the same steps 601-604 as in Figure 6 are performed. At step 701, at least one node, the node being an end-point node or an intermediate node, may be connected to each of the at least one SBN, through a IS-IS for SPB Level 1 interface to form an intra-site network that operates in IS-IS for SPB Level 1. Each SBN and each node may be identified with a unique first System-id. At step 702, the unique Site-id of the site each SBN is associated with, may be further assigned as a 3-byte area address field of TLVs of control frames constructed and advertised by the SBN on its IS-IS for SPB Level 1 interface.

While the above-described implementations have been described and shown with reference to particular steps performed in a particular order, it will be understood that these steps may be combined, sub-divided, or re-ordered without departing from the teachings of the present disclosure. At least some of the steps may be executed in parallel or in series. Accordingly, the order and grouping of the steps is not a limitation of the present technology. It should be expressly understood that not all technical effects mentioned herein need to be enjoyed in each and every embodiment of the present technology.

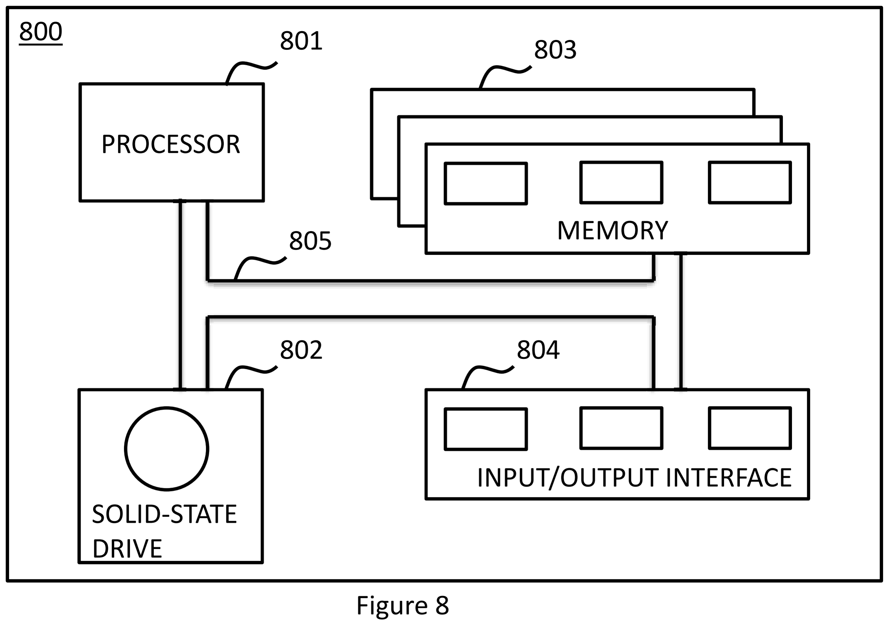

The method and process steps described above may be implemented in a computing system, of which an example, without limitation, may be found in relation to Figure 8. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the computing system 800 may comprise various hardware components including one or more single or multi-core processors collectively represented by a processor 801, a solid-state drive 802, a memory 803 and an input/output interface 804. In this context, the processor 801 may or may not be included in a FPGA. In some other aspects, the computing system 800 may be an "off the shelf" generic computing system. In some aspects, the computing system 800 may also be distributed amongst multiple systems. The computing system 800 may also be specifically dedicated to the implementation of the present technology. As a person skilled in the art of the present technology may appreciate, multiple variations as to how the computing system 800 is implemented may be envisioned without departing from the scope of the present technology.

Communication between the various components of the computing system 800 may be enabled by one or more internal and/or external buses 805 (e.g. a PCI bus, universal serial bus, IEEE 1394 "Firewire" bus, SCSI bus, Serial-ATA bus, ARINC bus, etc.), to which the various hardware components are electronically coupled.

The input/output interface 804 may allow enabling networking capabilities such as wire or wireless access. As an example, the input/output interface 804 may comprise a networking interface such as, but not limited to, a network port, a network socket, a network interface controller and the like. Multiple examples of how the networking interface may be implemented will become apparent to the person skilled in the art of the present technology. According to implementations of the present technology, the solid-state drive 802 may store program instructions, such as those part of, for example, a library, an application, etc. suitable for being loaded into the memory 803 and executed by the processor 801 for the method and process steps according to the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A computer-implemented method of building a segmented SPB network (100) comprising at least two sites (102ᵢ) and a IS-IS for SPB network topology, the method comprising:
- assigning a unique Site-id to each one of the at least two sites; and
- associating at least one Site Border Node, SBN, with each one of the at least two sites;
- connecting all the SBNs in the segmented SPB network through a IS-IS for SPB Level 2 interface to form an inter-site network that operates in IS-IS for SPB Level 2; and
- assigning to each SBN the unique Site-id of the site it is associated with, as a 3-byte area address field of TLVs of control frames constructed and advertised by each SBN respectively on its IS-IS for SPB Level 2 interface.

2. The method of claim 1, further comprising:
- connecting to each of the at least one SBN, at least one node, the node being an end-point node (BEB 104ij) or an intermediate node (BCB 103ik), through a IS-IS for SPB Level 1 interface to form an intra-site network that operates in IS-IS for SPB Level 1, wherein each one of the at least one SBN and the at least one node is identified with a unique first System-id; and
- further assigning to each SBN the unique Site-id of the site it is associated with, as a 3-byte area address field of TLVs of control frames constructed and advertised by each SBN respectively on its IS-IS for SPB Level 1 interface.

3. The method of claim 1 or 2, comprising further assigning to each node the unique Site-id of the site it is associated with, as a 3-byte area address field of TLVs of control frames constructed and advertised by each node respectively on its IS-IS for SPB Level 1 interface.

4. The method of any of the claims 1 to 3, comprising causing each SBN of a site, as local site, to discover all other SBNs of the local site and all SBNs of other sites, as remote sites, in the segmented SPB network, and maintain a list of all the discovered SBNs and the local or remote sites they are comprised in, based on the Site-id value obtained through parsing the area address field of TLVs of received control frames.

5. The method of claim 4, comprising causing each SBN of the local site to discover other SBNs comprised in the local site, as peer SBNs, by:
- determining that the Site-id value obtained through parsing the area address field of TLVs of received control frames on its IS-IS for SPB Level 2 interface is identical to the Site-id value of the local site; and
- determining that the peer SBNs operate in IS-IS for SPB Level 1, through identifying the unique first System-id in the control frames received from the peer SBNs on its IS-IS for SPB Level 1 interface.

6. The method of claim 4 or 5, comprising causing each SBN of the local site to discover SBNs of remote sites, as remote SBNs, by determining that the Site-id value obtained through parsing the area address field of TLVs of received control frames on its IS-IS for SPB Level 2 interface is different from the Site-id value of the local site.

7. The method of any of the claims 4 to 6, comprising upon establishing adjacency between at least two SBNs comprised in two different sites, instantiating a Site Meta Node, SMN, on each one of the at least two SBNs, wherein the SMN is identified with a unique second System-id that is different from any of the first System-ids, wherein the SMN hosts a representation of the segmented SPB network, comprising information regarding all discovered SBNs and the local or remote sites they are comprised in.

8. The method of claim 7, comprising obtaining the unique second System-id is a 6-byte value from the concatenation of a 3-byte Organization Unique Identifier, OUI, and of the Site-Id of the site comprising the SBN on which the SMN is instantiated.

9. The method of claim 7 or 8, comprising instantiating the SMN in the Level 1 intra-site network of the local site comprising the SBN on which it is instantiated, comprising animating SMN Link-State Packets, LSPs, with the peer SBNs as neighbors with equal cost, and a maximum path weight supported by the network to ensure that the SMN functions as an end-point node of the segmented SPB network.

10. The method of claim 9, comprising causing the instantiated SMN to provide an all-active and failover mode for the connectivity between the nodes of the local site and the nodes of remote sites.

11. The method of claim 9, comprising electing one SBN among the peer SBNs of the local site as Designated Animator, DA, wherein the DA performs instantiation of the SMN and animation and management of the SMN LSPs.

12. The method of claim 11, comprising causing the election of the DA to be based on the SBN among the peer SBNs with the lowest unique first System-id among the peer SBNs.

13. The method of any of the claims 9 to 12, comprising causing all peer SBNs of the local site to perform instantiation of the SMN and animation and management of the SMN LSPs.

14. The method of any of the claims 9 to 13, comprising causing each SBN of the local site:
- to mine LSP frames received from all SBNs in the inter-site network, and
maintain a list of ISID TLVs included in the mined LSP frames from the the inter-site network;
- to mine LSP frames received from nodes of the local site in the intra-site network, and maintain a list of ISID TLVs included in the mined LSP frames from the intra-site network;
- to maintain a per SBN path ownership from the SMN to a node of the local site, wherein the path ownership is determined per ECT/BVLAN; and
- to advertise, through LSP frames it generates to the Level 2 inter-site network, ISID TLVs of the local site.

15. The method of any of the claims 9 to 14, comprising causing the peer SBNs of the local site to discover a subset of ISID TLVs that are common between the local site and remote sites.

16. The method of claim 15, comprising causing each SBN of the local site to advertise to the intra-site network the subset of ISID TLVs by encoding the LSP of the SMN instantiated on the SBN.

17. The method of any of the claims 14 to 16, comprising entering by an administrator policy rules on the peer SBNs of the local site, such policy rules having as an object to filter out at least one of:
- ISID TLVs included in LSP frames received from the inter-site network, and
- ISID TLVs of the local site advertised in LSP frames generated to the the inter-site network.

18. The method of any of the claims 14 to 17, comprising upon establishing IS-IS for SPB Level 1 adjacency between the SBNs and the at least one node, performing a check on the Site-id, wherein adjacency is established only if the Site-id values match on all the Level 1 circuits of each of the SBNs and the at least one node.

19. The method of any of the claims 14 to 18, comprising upon checking the Site-id value obtained through parsing the area address field of TLVs of received control frames, performing a check on the local site that the obtained Site-id value is the same as the Site-id value associated with the local site, wherein any backdoor between a node of the local site and a node of the remote site is disabled if the obtained Site-id value is not the same as the Site-id value associated with the local site.

20. A computer-readable medium comprising computer-readable instructions that, upon being executed by a system, cause the system to perform the method of any of the claims 1 to 19.
